# EUROPÄISCHE PATENTSCHRIFT

(11) **EP 0 772 177 B1**
(45) Veröffentlichungstag und Bekanntmachung des Hinweises auf die Patenterteilung: **31.03.1999**
(21) Anmeldenummer: 96113166.1
(22) Anmeldetag: 16.08.1996
(51) Int. Cl.: G09F 3/00, G08G 1/017, G06K 19/02, B60R 13/10

(54) **Kennzeichnung für lackierte Gegenstände, insbesondere für Kraftfahrzeuge sowie Verfahren zur Anbringung der Kennzeichnung**
Marking for painted objects in particular for vehicles and method for fixing the marking
Marquage d'objets laqués en particulier pour véhicules et méthode d'application du marquage

(30) Priorität: 05.11.1995 DE 19541029
(43) Veröffentlichungstag der Anmeldung: 07.05.1997
(73) Patentinhaber: DAIMLER-BENZ AKTIENGESELLSCHAFT, 70567 Stuttgart (DE)
(72) Erfinder: Dannenhauer, Fritz, Dr., 79686 Hasel (DE); Holdik, Karl, Dr., 89081 Ulm (DE)

(56) Entgegenhaltungen:
- EP-A- 0 274 270
- EP-A- 0 347 772
- EP-A- 0 717 388
- WO-A-88/06330
- FR-A- 2 556 867
- US-A- 4 855 951
- US-A- 5 475 518
- US-A- 5 644 398

## Beschreibung

Die Erfindung betrifft eine Lackierung, die eine Kennzeichnung eines Gegenstandes, insbesondere eines Kraftfahrzeuges ermöglicht, bzw. ein Verfahren zur Anbringung der.Lackierung nach dem Oberbegriff des Anspruch 7 oder 8, wie beides aus der gattungsbildend zugrundegelegten DE 43 35 308 A1 als bekannt hervorgeht.

Die DE 43 35 308 A1 offenbart eine Kennzeichnung von Kraftfahrzeugen, welche insbesondere zum Erschweren und dadurch auch zur Hemmung von Kfz-Diebstählen vorgesehen ist. Des weiteren ist die Kennzeichnung schwer entfernbar und auf einfache Weise zu identifizeren. Die Kennzeichnung erfolgt durch eine Aufbringung von speziellen Informationen auf Bestandteile einer Kodierschicht der Lackierung, wobei die Kodierung Partikelen zugeordnet ist. Die insbesondere eine Größe unterhalb des mm-Bereichs aufweisenden Partikel stören den optischen Eindruck der Lackierung nicht. Allerdings ist die Vornahme der Kennzeichnung insbesondere für Kfz's sehr aufwendig, da sie ja nur für ein einziges Fahrzeug vorgenommen werden kann. Des weiteren ist eine Kennzeichnung älterer Fahrzeug sehr aufwendig und damit auch sehr teuer. Das gleiche gilt auch bei einer Nachlackierung, wie sie bspw. nach einer Reparatur erfolgen kann, wenn die Kennzeichnung in den frisch lackierten Bereichen mit gleicher Signifikanz verbleiben soll.

Aus der DE 34 45 401 A1 ist eine weitere Kennzeichnung für Kraftfahrzeuge bekannt, bei der bei einer mehrschichtigen Lakkierung unter einer Farbschicht eine mit einer Kennzeichnung versehene kodierte Kodierschicht angeordnet ist. Die Farbschicht weist im sichtbaren Spektralbereich eine reflektierende Eigenschaft auf. In einem außerhalb des sichtbaren Spektrums liegenden Wellenlängenbereich, in dem die Betrachtung der Kennzeichnung der Kodierschicht vorgenommen wird, ist die Farbschicht hingegen transparent. Ungünstigerweise ist hierbei allerdings bei der Vornahme der Lackierung der Auftrag einer zusätzlichen Schicht, nämlich der Kodierschicht sowie deren anschließende Kodierung notwendig. Ferner ist auch hier eine Nachbesserung des Lackes bei einem Unfall zumindest sehr aufwendig.

Aus der US 4,855,951 A1 ist ein Verfahren zur Einbringung von Intensitätseinbrüchen im Absorbtionsspektrum eins Stoffes bekannt, der ansonsten zumindest in diesem Teilbereich ein stetiges elektromagnetisches Spektrum aufweist. Das Verfahren ist unter dem Fachbegriff "hole burning" bekannt. Bei diesem Verfahren werden aus dem normalen Spektrum mittels eines Lasers bestimmte Frequenzen entfernt.

Die Aufgabe der Erfindung ist es, die gattungsgemäß zugrundegelegte Kennzeichnung dahingehend weiterzuentwickeln, daß sie auf einfache Weise bei der Produktion der Gegenstände vorgenommen werden kann. Des weiteren ist es Aufgabe der Erfindung ein Verfahren zur Vornahme der Kennzeichnung zu entwickeln, wobei möglichst auch ältere Gegenstände und oder reparierte Gegenstände nachkodiert werden können.

Die Aufgabe wird bei einer zugrundegelegten Kennzeichnung durch die kennzeichnenden Merkmale des Anspruchs 1 bzw. mit einem zugrundegelegten Verfahren mit den kennzeichnenden Verfahrensschritten des Anspruchs 7 oder 8 gelöst. Durch die gezielte Einbringung von schmalbandigen und sprunghaften Intensitätsveränderungen innerhalb eines Teilbereichs des elektromagnetischen Spektrums der Lackierung bei definierten Frequenzen kann einem jeden lackierten Gegenstand, insbesondere einem jeden Kraftfahrzeug, ein spezifischer, der Kennzeichnung dienender Code zugeordnet werden, wobei die Kodierung in einfacher Weise vorgenommen werden kann. Als besonderer Vorteil ist hierbei anzusehen, daß auch ältere Gegenstände gekennzeichnet werden können, ohne daß sich der Farbeindruck der Lackierung in nennenswerter Weise ändert.

Zweckmäßige Ausgestaltungen der Erfindung sind den Unteransprüchen entnehmbar. Im übrigen wird die Erfindung anhand von in den Figuren dargestellten Ausführungsbeispielen erläutert. Dabei zeigt
- Fig. 1: einen Schnitt durch eine Lackierung eines Gegenstandes und
- Fig. 2: ein innerhalb eines Meßbereichs angeordnetes Teilspektrum eines elektromagnetischen Spektrums einer Lackierung.

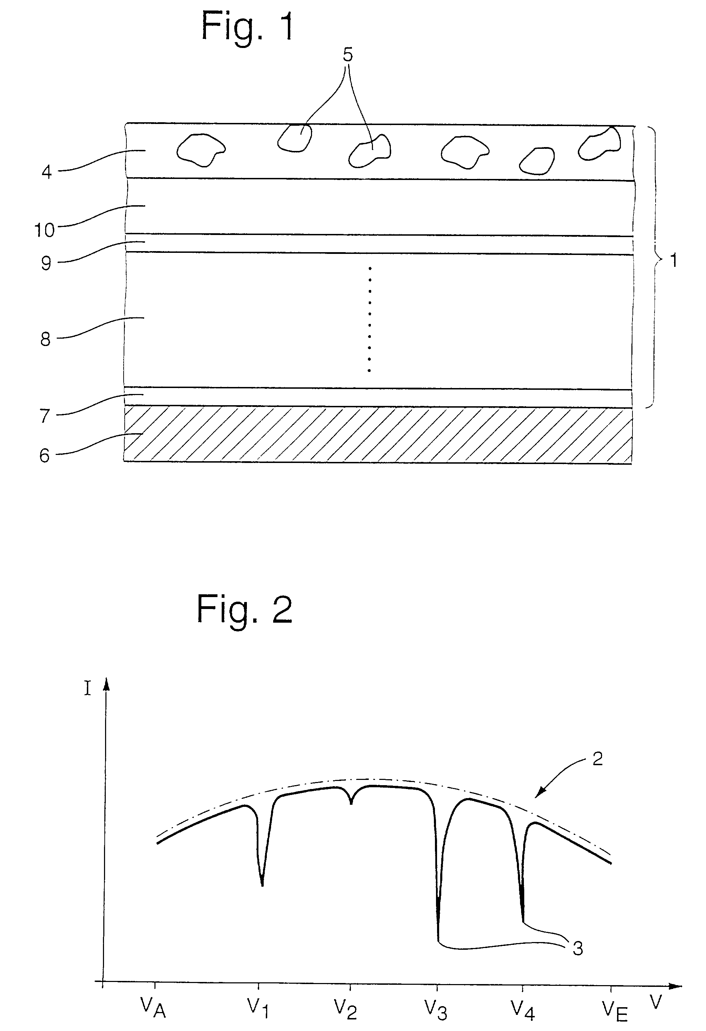

In Figur 1 ist ein Schnitt durch eine Lackierung 1 eines Gegenstandes 6, insbesondere eines Karosseriebleches einer Kfz-Karosserie dargestellt. Die Lackierung 1 weist einen mehrschichtigen Aufbau aus flächigen übereinander angeordneten Schichten auf. Der Schichtaufbau der Lackierung 1 über dem Gegenstand 6 umfaßt eine Phosphatierschicht 7, eine Grundierschicht 8, eine Füllschicht 9, ein Farblackschicht 10 und eine äußere Lackschicht 4, wobei je nach technischer Anforderung die Phospatierschicht 7 und die Füllerschicht 9 ersetzt werden oder auch entfallen können. Des weiteren kann es sinnvoll sein, die äußere Lackschicht 4 mit einer weiteren Klarlackschicht abzudecken, damit in der Lackschicht 4 angeordnete Partikel 5 nicht aus deren Oberfläche herausragen können.

Zur Einbringung einer Kennzeichnung des Gegenstandes 6 wird das elektromagnetische Spektrum der Lackierung 1 dahingehend manipuliert, daß es, wie in Figur 2 dargestellt, innerhalb eines Meßbereiches, der zwischen den Grenzfrequenzen νA und νE angeordnet ist, ein weitgehend stetiges spektrales elektromagnetisches Teilspektrum 2 aufweist, das bei bestimmten kennzeichnenden Frequenzen ν1, ν2, ν3 und ν4 schmalbandige Intensitätseinbrüche 3 von wenigstens 5% relativer Intensitätsänderung 3 aufweist.

Die Einbringung der Kennzeichnung in die Lackierung 1 erfolgt in diesem Fall dadurch, daß die Lackierung 1 nach deren Trocknung zumindest bereichsweise mittels einem Laser abgefahren und die kennzeichnenden Frequenzen ν1, ν2, ν3 und ν4 aus dem Teilspektrum 2 des elektromagnetischen Spektrums der Lackierung 1 beseitigt werden.

In dem vorliegenden Fall nach Figur 1 weist die äußere, aus Klarlack gebildete Lackschicht 4 Partikel 5 auf, die sinnvollerweise im sichtbaren Spektralbereich transparent sind. In diesem Fall sind die Partikel 5 zweckmäßigerweise mit einer einen Kode bildenden Kennzeichnung versehen und werden dem Lack der äußeren Lackschicht 4 vor dessen Auftrag beigegeben.

Die Einbringung der Kennzeichnung erfolgt hierbei sinnvollerweise dadurch, daß die Partikel 5 bei ihrer Herstellung oder nach dem Auftrag, insbesondere nach der Trocknung der Lackschicht 4 der Lackierung 1 mittels Laser abgefahren und die kennzeichnenden Frequenzen ν1, ν2, ν3 und ν4 aus dem Teilspektrum 2 beseitigt werden.

Die bestimmten Frequenzen ν1, ν2, ν3 und ν4 sind außerhalb des sichtbaren Spektralbereichs angeordnet, und hierbei insbesondere in einem Spektralbereich, indem die restlichen Bestandteile der Lackierung 1 eine geringe optische Aktivität aufweisen. Dadurch wirken sich diese restlichen Bestandteile der Lackierung 1 allenfalls gering störend auf das die Kennzeichnung aufweisende Teilspektrum 2 aus.

Die Partikel 5 sind insbesondere Polymere aus einer flüssigkristallinen Substanz mit chiraler Phase, da dadurch noch zusätzlich ein als Farb-Flop bezeichneter Effekt der Lackierung 1 ermöglicht ist.

Wie in Figur 2 dargestellt, ist das Teilspektrum 2 zwischen den Grenzfrequenzen νA (Anfangsfrequenz) und νE (Endfrequenz) angeordnet. Die unterschiedlichen Intensitätseinbrüche 3 befinden sich bei den kennzeichnenden Frequenzen ν1, ν2, ν3 und ν4, die in ihrer Gesamtheit die Kennzeichnung des Gegenstandes bilden.

Da die Einbringung der Intensitätseinbrüche 3 günstigerweise durch Bestrahlung mit einem Halbleiter-Laser erzeugt werden, weisen die einzelnen Intensitätseinbrüche 3 eine Halbwertsbreite weniger 10 Angström und insbesondere weniger 1 Angström auf.

## Patentansprüche

1. Lackierung, die eine Kennzeichnung eines Gegenstandes, insbesondere eines Kraftfahrzeuges ermöglicht, wobei die Lackierung (1) ein in einem Teilbereich (2) weitgehend stetiges elektromagnetisches Spektrum aufweist, welches Spektrum bei bestimmten Frequenzen schmalbandige, mittels Laser erzeugte Intensitätseinbrüche (3) von wenigstens 5% relativer Intensitätsänderung aufweist, welche Frequenzen außerhalb des sichtbaren Spektrums angeordnet sind, wobei die Intensitätseinbrüche (3) in ihrer Gesamtheit die Kennzeichnung des Gegenstandes bilden.

2. Lackierung nach Anspruch 1,
**dadurch gekennzeichnet,**
daß die Lackierung mehrere Lackschichten (4, 7, 8, 9, 10) aufweist, daß eine Lackschicht (4) der Lackierung (1) zumindest eine Art von Partikel aufweist, und daß diese Partikel (5) mit den Intensitätseinbrüchen (3) versehen sind.

3. Lackierung nach Anspruch 1,
**dadurch gekennzeichnet,**
daß die Intensitätseinbrüche (3) eine Halbwertsbreite weniger 10 Angström, insbesondere weniger 1 Angström aufweisen.

4. Lackierung nach Anspruch 2,
**dadurch gekennzeichnet,**
daß die Lackschicht (4) der Lackierung (1) eine im sichtbaren Spektralbereich transparente äußere Lackschicht (4) aus Klarlack ist und daß die Partikel (5) im sichtbaren Spektralbereich transparent sind.

5. Lackierung nach Anspruch 2,
**dadurch gekennzeichnet,**
daß die Partikel (5) aus einem Polymer bestehen.

6. Lackierung nach Anspruch 2,
**dadurch gekennzeichnet,**
daß die Partikel (5) aus einer flüssigkristallinen Substanz mit chiraler Phase bestehen.

7. Verfahren zur Kennzeichnung von lackierten Gegenständen, insbesondere von Kraftfahrzeugen, bei welchem Verfahren auf dem Gegenstand eine vorzugsweise mehrere Lackschichten aufweisende Lackierung aufgetragen wird, die in einem Teilbereich ein weitgehend stetiges elektromagnetisches Spektrum aufweist, und bei dem Eigenschaften des spektralen Verlaufs der Lackierung zur Kennzeichnung des Gegenstandes herangezogen werden,
**dadurch gekennzeichnet,**
daß die Lackierung (1) mittels Laser in der Weise gezielt verändert wird, daß die Lackierung (1) bei bestimmtem Frequenzen schmalbandige Intensitätseinbrüche (3) von wenigstens 5% relativer Intensitätsänderung aufweist, welche Frequenzen außerhalb des sichtbaren Spektralbereichs angeordnet sind.

8. Verfahren zur Kennzeichnung von lackierten Gegenständen, insbesondere von Kraftfahrzeugen, bei welchem Verfahren auf dem Gegenstand eine mehrere Lackschichten aufweisende Lackierung aufgetragen wird, die in einem Teilbereich ein weitgehend stetiges elektromagnetisches Spektrum aufweist, und bei dem Eigenschaften des spektralen Verlaufs der Lackierung zur Kennzeichnung des Gegenstandes herangezogen werden,
**dadurch gekennzeichnet,**
daß wenigstens einer der besagten Lackschichten (4) der Lackierung (1) vor ihrer Applikation Partikel (5) beigegeben werden, welche Partikel (5) mittels Laser in der Weise gezielt verändert wurden, daß die Lackierung (1) bei bestimmtem Frequenzen schmalbandige Intensitätseinbrüche (3) von wenigstens 5% relativer Intensitätsänderung aufweist, welche Frequenzen außerhalb des sichtbaren Spektralbereichs angeordnet sind.

9. Verfahren nach Anspruch 7,
**dadurch gekennzeichnet,**
daß ein jeweils einer bestimmten Frequenz zugeordneter Intensitätseinbruch (3) im Teilbereich (2) dadurch erzeugt wird, daß die getrocknete Lackierung (1) zumindest bereichsweise mit Laserlicht der betreffenden Frequenz beaufschlagt wird.

10. Verfahren nach Anspruch 7 oder 8,
**dadurch gekennzeichnet,**
daß die Intensitätseinbrüche (3) im Teilspektrum (2) durch Bestrahlung mit einem Halbleiter-Laser erzeugt werden.

## Claims

1. Lacquering which enables the specific marking of an object, particularly a motor vehicle, whereby the lacquering (1) has, in a partial spectral range (2), a largely constant electromagnetic spectrum, this spectrum showing narrow-band drops (3) in intensity, of at least 5% relative change in intensity, at certain frequencies, which are produced by means of a laser device, the said frequencies being outside of the visible spectrum, whereby the drops (3) in intensity together form the characteristic marking of the object concerned.

2. Lacquering in accordance with claim 1,
characterized in that
the lacquering has several layers of lacquer (4, 7, 8, 9, 10), in that a lacquer-layer (4) of lacquering (1) has at least one type of particle, and in that these particles (5) are provided with the drops (3) in intensity.

3. Lacquering in accordance with claim 1,
characterized in that
the drops (3) in intensity have a half-value breadth of less than 10 angstroms, particularly of less than 1 angstrom.

4. Lacquering in accordance with claim 2,
characterized in that
the lacquer-layer (4) of the lacquering (1) is an outer lacquer layer, of clear lacquer, which is transparent and is located in the visible spectral range, and in that the particles (5) are transparent in the visible spectral range.

5. Lacquering in accordance with claim 2,
characterized in that
the particles (5) are made of a polymer.

6. Lacquering in accordance with claim 2,
characterized in that
the particles (5) are of a liquid, crystalline substance having a chiral phase.

7. Process for marking lacquered objects, particularly motor vehicles, in which process lacquering, which preferably comprises several layers of lacquer, is applied to the object, the said lacquering having, within a partial range, a largely constant electromagnetic spectrum, and having spectral properties, the behaviour of which is used for the marking of the object,
characterized in that
the lacquering (1), through the use of a laser device, is intentionally changed such that the lacquering (1) shows narrow-band drops (3) in intensity, of at least 5% relative change in intensity, at certain frequencies, these frequencies lying outside the visible, spectral range.

8. Process for the marking of lacquered objects, particularly motor vehicles, in which multi-layer lacquering is applied to the object, the said lacquering showing a largely constant electromagnetic spectrum within a partial range, and having properties of spectral behaviour which are drawn on for the specific marking of the object,
characterized in that
at least one of the said layers of lacquer (4) of the lacquering (1) has particles (5) added to it before its application, the said particles (5) being specifically and intentionally changed such that the lacquering (1), at certain frequencies, shows narrow-band drops (3) in intensity of at least 5% relative change in intensity, the said frequencies lying outside of the visible, spectral range.

9. Process in accordance with claim 7,
characterized in that
a drop (3) in intensity, in the partial spectrum, associated with a given specific frequency, is produced by applying laser light, at the given frequency concerned, to at least areas of the dried lacquering (1).

10. Process in accordance with claim 7 or 8,
characterized in that
the drops (3) in intensity, in the partial spectrum (2), are produced by radiation with a semi-conductor laser device.

## Revendications

1. Laquage qui permet une caractérisation d'un objet, en particulier d'un véhicule automobile, le laquage (1) présentant dans une plage partielle (2) un spectre électromagnétique pratiquement constant, ledit spectre comportant à des fréquences déterminées des creux à bande étroite d'intensité (3) générés par laser et présentant une variation d'intensité relative d'au moins 5%, lesdites fréquences étant situées à l'extérieur du spectre visible, les creux d'intensité (3) formant dans leur ensemble la caractérisation de l'objet.

2. Laquage selon la revendication 1,
caractérisé
en ce que le laquage comporte plusieurs couches de laque (4, 7, 8, 9, 10), en ce qu'une couche de laque (4) du laquage (1) comporte au moins un type de particules et en ce que ces particules (5) présentent des creux d'intensité (3).

3. Laquage selon la revendication 1,
caractérisé
en ce que les creux d'intensité (3) présentent une largeur de demi-valeur de moins de 10 Angström, en particulier de moins 1 Angström.

4. Laquage selon la revendication 2,
caractérisé
en ce que la couche de laque (4) du laquage (1) est une couche extérieure de laque (4) qui est transparente dans la plage visible du spectre et qui est formée d'une couche de laque claire et en ce que les particules (5) sont transparentes dans la plage visible du spectre.

5. Laquage selon la revendication 2,
caractérisé
en ce que les particules (5) sont en un polymère.

6. Laquage selon la revendication 2,
caractérisé
en ce que les particules (5) sont en une substance formée de cristaux liquides présentant une phase chirale.

7. Procédé de caractérisation d'objets laqués, en particulier de véhicules automobiles, procédé suivant lequel un laquage comprenant de préférence plusieurs couches de laque est déposé sur l'objet et présente dans une plage partielle un spectre électromagnétique pratiquement constant et suivant lequel les caractéristiques de la variation spectrale du laquage sont utilisées pour la caractérisation de l'objet,
caractérisé
en ce que le laquage (1) est modifié de manière spécifique par laser de façon que le laquage (1) comporte à des fréquences déterminées des creux d'intensité à bande étroite (3) présentant des variations relatives d'intensité d'au moins 5%, lesdites fréquences étant situées à l'extérieur de la plage visible du spectre.

8. Procédé de caractérisation d'objets laqués, en particulier de véhicules automobiles, procédé suivant lequel un laquage comprenant plusieurs couches de laque est déposé sur l'objet et comporte dans une plage partielle un spectre électromagnétique pratiquement constant et suivant lequel les caractéristiques de la variation spectrale du laquage sont utilisées pour la caractérisation de l'objet,
caractérisé
en ce qu'au moins l'une (4) desdites couches de laque du laquage (1) est additionnée de particules (5) avant son application, lesdites particules (5) étant modifiées de manière spécifique par laser de façon que le laquage (1) comporte à des fréquences déterminées des creux d'intensité (3) à bande étroite présentant des variations relatives d'intensité d'au moins 5%, lesdites fréquences étant situées à l'extérieur de la plage visible du spectre.

9. Procédé selon la revendication 7,
caractérisé
en ce que chaque creux d'intensité (3) associé à une fréquence déterminée est généré dans la plage partielle (2) par le fait qu'une lumière laser de la fréquence concernée est projetée au moins dans certaines zones sur le laquage séché (1).

10. Procédé selon la revendication 7 ou 8,
caractérisé
en ce que les creux d'intensité (3) sont générés dans le spectre partiel (2) par irradiation par un laser à semi-conducteurs.
